# EUROPÄISCHE PATENTSCHRIFT

(11) **EP 2 315 624 B1**
(45) Veröffentlichungstag und Bekanntmachung des Hinweises auf die Patenterteilung: **09.05.2018**
(21) Anmeldenummer: 09777500.1
(22) Anmeldetag: 29.07.2009
(51) Int. Cl.: B01D 63/04, B01D 63/08, B01D 63/12

(54) **FILTRATIONSSYSTEM MIT FLUIDKUPPLUNGEN**
FILTRATION SYSTEM HAVING FLUID COUPLINGS
SYSTÈME DE FILTRATION À RACCORDS FLUIDIQUES

(30) Priorität: 04.08.2008 DE 102008036096
(43) Veröffentlichungstag der Anmeldung: 04.05.2011
(73) Patentinhaber: Microdyn-Nadir GmbH, 65203 Wiesbaden (DE)
(72) Erfinder: MEYER-BLUMENROTH, Ulrich, 65510 Idstein-Wörsdorf (DE); VOIGT, Reinhard, 99867 Gotha (DE)
(74) Vertreter: Plate, Jürgen
(86) Internationale Anmeldenummer: PCT/EP2009/005472
(87) Internationale Veröffentlichungsnummer: WO 2010/015346

(56) Entgegenhaltungen:
- EP-A2- 0 925 825
- JP-A- 2001 224 931
- JP-A- 2004 275 822
- US-A- 4 293 419
- US-A- 4 476 015
- US-A- 5 389 260
- US-A1- 2005 035 047
- US-A1- 2007 131 605

## Beschreibung

Die vorliegende Erfindung betrifft ein Filtrationssystem, das ein oder mehrere Flachfilter-, Kapillarrohrfilter- oder Wickelfiltermodule mit randseitiger Permeatableitung und Fluidkupplungen zum Verbinden der Filtermodule mit einem Fluidverteiler oder weiteren Filtermodulen umfasst.

Zahlreiche der bekannten Filtrationssysteme mit Flächenfiltern, die z.B. zur Abwasserreinigung eingesetzt werden, beinhalten Filtermodule mit einem oben und unten offenen rohr- oder kastenförmigen Gehäuse, in dem mehrere flache Filterelemente parallel zueinander angeordnet sind. Die Zwischenräume zwischen den Filterelementen bilden Durchgänge, die durchströmbar sind. Die Filterelemente sind als Taschen oder Kassetten gestaltet, bei denen ein flexibles oder starres Drainageelement beidseitig von einem mit einer Filtermembran beschichteten Trägervlies - im Folgenden als Membranvlies bezeichnet - umgeben ist. Jedes Filterelement besitzt mittig oder randseitig angeordnete Öffnungen, über die es an ein Rohrsystem zur Absaugung des durch die Filtermembran hindurchtretenden Permeatfluids angeschlossen ist. Das Drainageelement dient als Abstandshalter und formgebende Stütze für die Membranvliese sowie zur Ableitung des Permeates zu den Öffnungen und zur Absaugung. Der Strömungswiderstand des Drainageelementes beeinflusst die Druckverteilung im Inneren des Filterelementes und damit gekoppelt die Filtereffizienz.

WO 03/037489 A1 beschreibt ein Filtrationsmodul zur Reinigung von Abwasser mit mehreren, mindestens eine Öffnung zur Entwässerung ihres Innenraums aufweisenden Filtermembrantaschen, die vertikal, parallel und vorzugsweise in gleichem Abstand zueinander in einem starren Halter so angeordnet sind, dass die zwischen benachbarten Filtermembrantaschen liegenden Zwischenräume intensiv von einer Flüssigkeit durchströmbar sind.

DE 2 213 165 offenbart einen Filter, bei dem die Filterpatrone aus einem spiralförmig aufgewickelten Mehrlagentuch mit zwei entgegengesetzten spiralförmigen Endflächen besteht. Die das Tuch bildenden Lagen sind derart abgedichtet, dass das in die Filterpatrone durch eine spiralförmige Endfläche eintretende Fluid durch mindestens eine Filterfläche strömen muss, bevor es die Filterpatrone wieder verlassen kann. Jede Filterlage befindet sich zwischen zwei dünnen Abstandslagen mit hohem Porenvolumen. Gegen die Fläche einer der Abstandslagen ist mindestens eine fluidundurchlässige Lage gelegt. Durch Verwendung einer dünnen Abstandslage wird eine kompakte Filterpatrone mit großer aktiver Filterfläche pro Volumeneinheit erhalten.

Die US 5,304,312 beschreibt eine versiegelte Filtereinheit mit erster und zweiter stirnseitiger Endkappe, wobei die Endkappen Verbinder zum Anschluss von Leitungen für eine zu filternde Rohflüssigkeit und ein hieraus gefiltertes Permeat aufweisen. Die Filtereinheit beinhaltet ein zwischen den Endkappen angeordnetes Filterelement aus einem spiralförmig gewickelten zweilagigen Filterverbundmaterial, das eine Filterlage und eine flüssigkeitsundurchlässige Abstandslage umfasst. An den beiden gegenüberliegenden Stirnseiten des spiralförmig gewickelten Filterverbundmaterials sind die Ränder der Filterlage jeweils mit der links und rechts benachbarten Abstandslage flüssigkeitsdicht verbunden. Dieser Aufbau gewährleistet, dass die über die erste Endkappe zugeführte Rohflüssigkeit einmal die Filterlage permeieren muss, um als Permeat an der zweiten Endkappe abgeführt zu werden.

EP 1 256 372 A2 lehrt ein Filtermodul, das eine spiralförmig um ein perforiertes Rohr gewickelte Kapillarfiltermatte umfasst. Durch das perforierte Rohr wird ein zu filterndes Rohfluid zugeführt und mit der spiralförmig gewickelten Kapillarfiltermatte in Kontakt gebracht. Mittels eines Druckdifferentials zwischen der Innen - und Außenseite der Kapillarfilter wird aus dem Rohfluida ein Permeat gefiltert und aus dem Inneren der Kapillarfilter abgeführt. Ein Zugang zum Inneren der Kapillarfilter wird geschaffen, indem die beiden Stirnseiten der spiralförmig gewickelten Kapillarfiltermatte mit Endkappen aus einem gießfähigen härtbaren Material versehen und die erhaltenen Endkappen im wesentlichen senkrecht zur Längsachse der Kapillarfilter abgeschnitten werden.

US 2005/0035047 A1 offenbart eine Kupplung für ein Spiralfiltermodul mit einem zentralen Stützelement und einem Ring, der mit dem zentralen Stützelement durch Speichen verbunden ist. Eine Stirnfläche des Ringes ist mit einer Nut ausgestattet, die für die Aufnahme einer Ringdichtung vorgesehen ist. Im Weiteren ist der Ring mit Aufnahmen für mechanische Halterungen für die mechanische Verbindung von zwei Kupplungen ausgerüstet.

US 4,293,419 beschreibt eine Filtervorrichtung mit einem als zylindrisches Rohr ausgebildeten Druckbehälter, der an beiden Enden mit Stirnplatten ausgestattet ist, wobei jede Stirnplatte einen Auslass für Permeat aufweist. Der Druckbehälter ist durch eine mittig angeordnete Trennplatte in einen ersten und zweiten Bereich geteilt, in dem jeweils ein Kapillarfiltermodul angeordnet ist. Durch Leitungen in der Trennplatte wird ein zu filterndes Rohfluid durch den ersten Bereich und hieran anschließend den zweiten Bereich geleitet und abgeführt. Bei der Passage des Rohfluids durch den ersten und zweiten Bereich mit den darin angeordneten Kapillarfiltermodulen wird im Inneren der Kapillarfilter Permeat gebildet. Die den Stirnseiten des Druckbehälters zugewandten Enden der Kapillarfilter sind offen und fluiddicht von den von Rohfluid durchströmten Bereichen isoliert.

US 5389,260 lehrt eine zylindrische Kappe für ein Kapillarfiltermodul mit voneinander fluiddicht isolierten Durchführungen für ein zu filterndes Rohfluid und das durch Filtration erhaltene Permeat.

Bei konstanten Betriebsbedingungen, wie transmembranem Differentialdruck, Feststoffgehalt und Strömungsgeschwindigkeit des Rohfluids ist die Leistung eines Filtrationssystems, d.h. das Volumen an gefiltertem Rohfluid pro Stunde, proportional zur aktiven Filtrationsfläche. Aufgrund produktionsbedingter Beschränkungen und der begrenzten mechanischen Belastbarkeit industriell gefertigter Filtermembranen ist die Größe der aktiven Filtrationsfläche herkömmlicher Filtermodule nach oben begrenzt. Zum Bau von Filtrationssystemen mit hoher Filtrationsleistung wird deshalb eine große Zahl von Filtermodulen in einer Art Parallelschaltung durch ein Rohrleitungssystem miteinander verbunden. Derartige Rohrleitungssysteme, die üblicherweise eine Vielzahl von Verzweigungen und Rohrkupplungen aufweisen, sind kostspielig in der Anschaffung, aufwendig in der Montage und erhöhen den Raumbedarf des Filtrationssystems, ohne zur Filtrationsleistung beizutragen.

Dementsprechend hat die vorliegende Erfindung die Aufgabe, ein Filtrationssystem mit einfacher und effektiver Fluidführung bereitzustellen. Im Weiteren soll die Erfindung es ermöglichen, eine Vielzahl von Filtermodulen ohne Einsatz eines aufwendigen Rohrleitungssystems zu einem Filtrationssystem mit hoher Filtrationsleistung zu verbinden.

Diese Aufgabe wird gelöst durch ein Filtrationssystem, umfassend
- mehrere Filtermodule und
- mehrere Fluidkupplungen zur Ankopplung der Filtermodule an einen Fluidverteiler und weitere Filtermodule, wobei
- die Filtermodule als Flachfilter-, Kapillarrohrfilter- oder Wickelfiltermodule mit einfach oder zweifach randseitigen Permeatauslassöffnungen ausgestaltet sind;
- die Fluidkupplungen mindestens eine Durchführung für Permeatfluid aufweisen,
- die Durchführung für Permeatfluid mit den Permeatauslassöffnungen verbunden ist;
- jeweils zwei Filtermodule (10, 10') mittels einer Fluidkupplung (70, 70a, 70b, 70c) miteinander verbunden sind;
- die Filtermodule (10, 10') zwei Stirnwände (3, 3') umfassen, wobei mindestens eine Stirnwand (3, 3') Permeatauslassöffnungen (65, 67), eine oder mehrere Durchführungen (7, 7') für Rohfluid und eine oder mehrere Durchführungen (9, 9') für Konzentratfluid aufweist;
- die Fluidkupplungen (70, 70a, 70b, 70c) mindestens eine Durchführung (72) für Rohfluid, die von der Durchführung (73) für Permeatfluid fluiddicht isoliert ist, aufweisen; und
- die Fluidkupplungen (70, 70a, 70b, 70c) mindestens eine Durchführung (74) für Konzentratfluid, die von der Durchführung (73) für Permeatfluid fluiddicht isoliert ist, aufweisen.

Weiterbildungen der Erfindung zeichnen sich dadurch aus, dass die Fluidkupplung
- einen ein-, zwei- oder dreistückig ausgebildeten Kupplungskörper umfasst;
- einen einstückig ausgebildeten Kupplungskörper mit mindestens einem Permeatbecken umfasst, wobei das Permeatbecken mit der Durchführung für Permeatfluid und mit den Permeatauslassöffnungen der Filtermodule verbunden ist;
- einen einstückig ausgebildeten Kupplungskörper mit mindestens einem Permeatbecken und mindestens einem Konzentratbecken umfasst, wobei das Permeatbecken mit der Durchführung für Permeatfluid und mit den Permeatauslassöffnungen der Filtermodule und das Konzentratbecken mit der Durchführung für Konzentratfluid verbunden sind; und
- Dichtungen umfasst, wobei die Dichtungen vorzugsweise ringartig geschlossen sind.

Die Filtermodule zeichnen sich insbesondere dadurch aus, dass sie
- mindestens eine Stirnwand mit einer oder mehreren Durchführungen für Permeatfluid ausgestattet ist; oder
- mindestens eine Stirnwand jeweils eine oder mehrere Durchführungen für Permeatfluid, Rohfluid und Konzentratfluid aufweist.

In einer anderen Weiterbildung der Erfindung umfassen die Filtermodule ein Gehäuse, das vorzugsweise rohrförmig ausgestaltet ist.

In einer besonders bevorzugten Ausführungsform umfassen die Filtermodule eine oder mehrere Durchleitungen für Permeatfluid, wobei die Durchleitungen im wesentlichen parallel zu den Filtrationsflächen verlaufen und die beiden Stirnseiten der Filtermodule verbinden.

Weitere Ausgestaltungen des erfindungsgemäßen Filtrationssystems sind in den Ansprüchen 17-19 wiedergegeben.

Im Folgenden wird die Erfindung anhand von Figuren näher erläutert. Es zeigen in schematischer Darstellung:
- Fig. 1: ein Filtrationssystem mit drei durch Fluidkupplungen verbundenen Filtermodulen;
- Fig. 2a-b: Fluidkupplungen mit einstückig und dreistückig ausgebildetem Kupplungskörper;
- Fig. 3a-c: Schnittansichten von Filtermodulen;
- Fig. 4: Schnittansicht zweier Filtermodule, die mittels einer Fluidkupplung verbunden sind;
- Fig. 5: Querschnitt eines bevorzugten Wickelfiltermoduls mit spiralförmig gewickelten Flachfilterelementen mit zwischenliegenden Abstandshaltern; und
- Fig. 6a-d: perspektivische Schnittansichten von Wickelfiltermodulen.

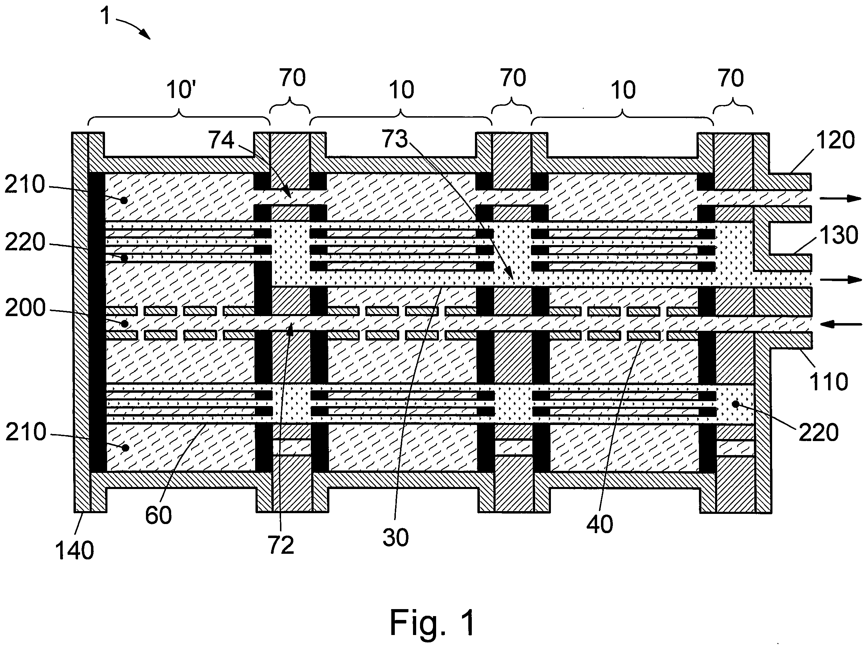

Die in Fig. 1 gezeigten Fluidkupplungen 70 weisen eine oder mehrere Durchführungen 72 für Rohfluid 200, eine oder mehrere Durchführungen 73 für Permeatfluid 220 und eine oder mehrere Durchführungen 74 für Rohfluid 210 auf.

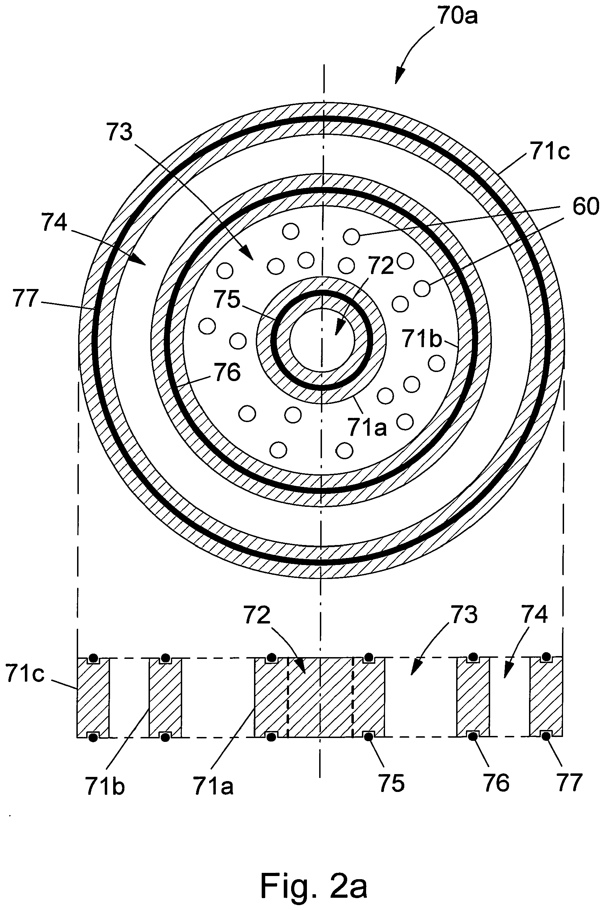

Fig. 2a zeigt in Draufsicht und Querschnitt eine erfindungsgemäße zylindrische Fluidkupplung 70a, die einen dreistückigen Kupplungskörper (71a, 71b, 71c) aus drei konzentrisch angeordneten Ringen abgestufter Größe umfasst. Der von dem inneren Ring 71a umschlossene zylindrische Raumbereich bildet eine Durchführung 72 für Rohfluid 200. Der von dem inneren Ring 71a und dem mittleren Ring 71b umschlossene Raumbereich bildet eine Durchführung 73 für Permeatfluid 220. Eine weitere Durchführung 74 für Konzentratfluid 210 ist von dem mittleren Ring 71b und dem äußeren Ring 71c umschlossen. Durch jeweils zwei auf gegenüberliegenden Stirnseiten der Ringe (71a, 71b, 71c) angeordnete Ringdichtungen (75, 76, 77) sind die Durchführungen (72, 73, 74) gegeneinander abgedichtet. Um die Funktion der Fluidkupplung 70a zu veranschaulichen, sind in Fig. 2a die Querschnitte bzw. die endseitigen Öffnungen von Kapillarohrfilterelementen 60 dargestellt. Die Kapillarrohrfilterelemente 60 sind in den Filtermodulen (10', 10, 10) derart angeordnet, dass ihre endseitigen Öffnungen mit der Durchführung 73 für Permeatfluid 220 verbunden sind und ein von Permeatfluid 220 durchströmtes Leitungssystem bilden.

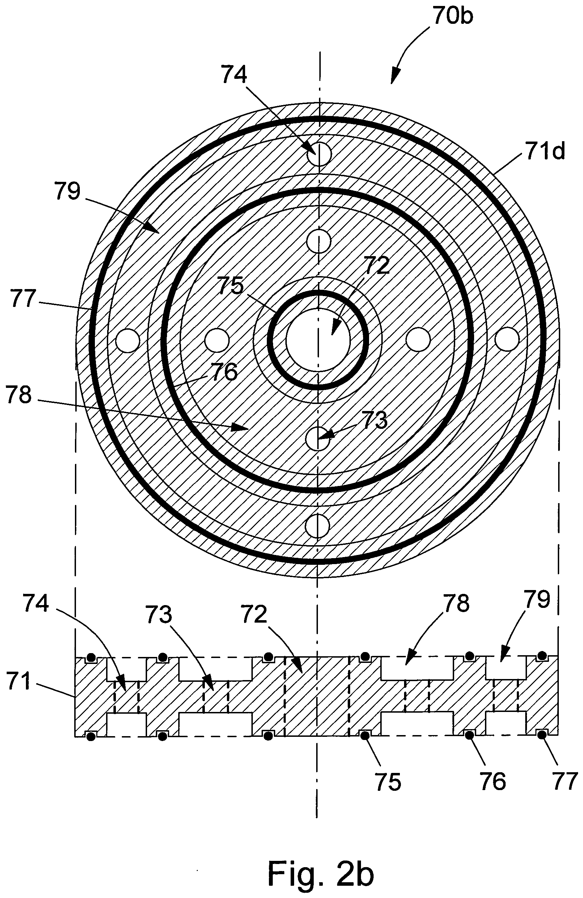

Eine weitere erfindungsgemäß bevorzugte Fluidkupplung 70b ist in Figur 2b dargestellt. Die Fluidkupplung 70b umfasst einen einstückig ausgebildeten Kupplungskörper 71d, der Durchführungen (72, 73, 74) für Rohfluid 200, Permeatfluid 220 und Konzentratfluid 210 aufweist. Zur Ableitung von Permeatfluid 220 aus den Filtermodulen (10', 10, 10) und zum Verbinden von vier Durchführungen 73 für Permeatfluid 220, ist der Kupplungskörper 71d mit einer Verteilerkammer 78 in Form einer ringförmig umlaufenden Aussparung ausgestattet. Eine weitere ebenfalls als ringförmig umlaufende Aussparung gestaltete Verteilerkammer 79 verbindet vier Durchführungen 74 für Konzentratfluid 210. Durch jeweils zwei auf gegenüberliegenden Stirnseiten des Kupplungskörpers 71d angeordnete Ringdichtungen (75, 76, 77) sind die Durchführungen (72, 73, 74) gegeneinander abgedichtet.

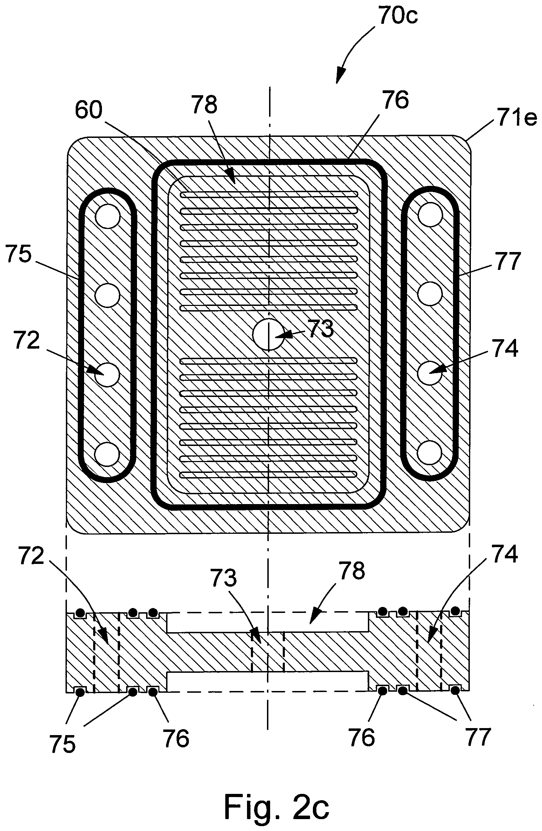

Die in Fig. 2a und 2b gezeigten Fluidkupplungen 70a und 70b eignen sich für Filtermodule (10', 10, 10) mit zylindrischem Querschnitt, insbesondere für Wickelfiltermodule und für Kapillarrohrfiltermodule, bei denen die Rohröffnungen der Kapillarrohrfilter in einem ringförmigen, vorzugsweise zur Verteilerkammer 78 kongruenten Bereich um eine zentrale Achse herum angeordnet sind. Für Flachfiltermodule mit planen Filterelementen 60 ist eine Fluidkupplung der in Fig. 2c gezeigten Art geeignet. Eine Fluidkupplung 70c umfasst einen einstückigen Kupplungskörper 71e. Die weiteren Bezugszeichen haben die gleiche Bedeutung wie in Fig. 2b. Zusätzlich sind in der Draufsicht der Fluidkupplung 70c die Querschnitte von planen Filterelementen 60 dargestellt. Jeweils vier Durchführungen 72 und 74 dienen zur Weiterleitung von Rohfluid 200 bzw. Konzentratfluid 210.

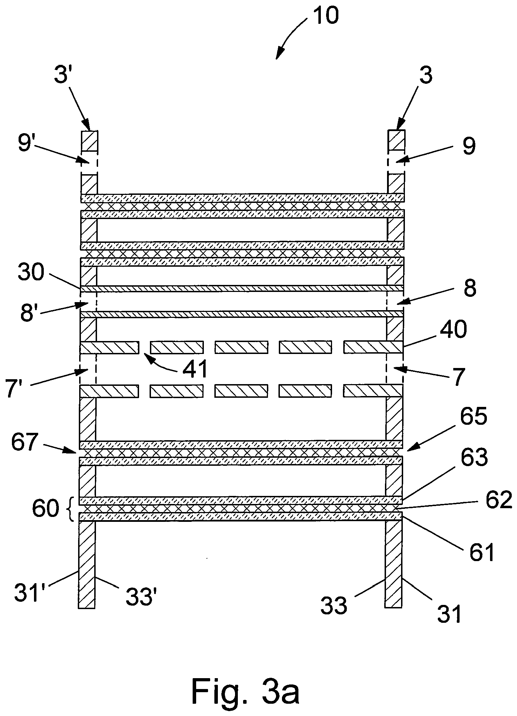

Die Kupplungsköper 71a bis 71e bestehen vorzugsweise aus einem Grundmaterial, dem ggf. Additive zugesetzt sind. Das Grundmaterial ist ausgewählt aus der Gruppe, umfassend Polymere, wie Polypropylen, Polyvinylchlorid und dergleichen; Thermoplaste, GFK, Harze, Gummi natürlichen oder synthetischen Ursprungs und Mischungen der vorgenannten Materialien. Als Additive werden vorzugsweise Glas- oder Carbonfasern verwendet.
Die Kupplungsköper 71a bis 71e werden auf verschiedene Weise hergestellt, z.B. mittels Spritzguss ggf. gefolgt von mechanischer Bearbeitung oder durch mechanisches Bearbeiten von Rohlingen. Alternativ hierzu können die Kupplungskörper 71a bis 71e durch schichtweise Laminierung von geeignet geformten bzw. gestanzten Flachmaterialien erzeugt werden. Fig. 3a zeigt ein Filtermodul 10 mit Filterelementen 60 im Querschnitt. Die Filterelemente 60 sind als ebene oder spiralförmig gewickelte Flächenfilter oder als Kapillarrohrfilter ausgestaltet. Bei dem in Fig. 3a dargestellten Filterelement 60 handelt es sich z.B. um einen Flächenfilter mit zwei Filtermembranen (61, 63) und zwischenliegendem Drainageelement 62 oder um einem Kapillarrohrfilter, wobei die Bezugszeichen 61 und 63 gegenüberliegende Schnittflächen der Kapillarrohrwand bezeichnen und das Drainageelement 62 gänzlich entfällt. Das Filtermodul 10 umfasst zwei Stirnwände 3 und 3' mit Außenseiten 31 und 31'. Offene Randbereiche bzw. Permeatauslassöffnungen 65 und 67 der Filterelemente 60 münden an den Außenseiten 31 und 31'. Bevorzugt weisen die Stirnwände (3, 3') Durchführungen (7, 7') für Rohfluid 200, Durchführungen (8, 8') für Permeatfluid 220 und Durchführungen (9, 9') für Konzentratfluid 210 auf, wobei die Durchführungen (8, 8') durch eine Permeatleitung 30 fluiddicht verbunden sind. Die Permeatleitung 30, die im wesentlichen parallel zur Längsachse bzw. parallel zu den Membranoberflächen der Filterelemente 60 angeordnet ist, ermöglicht die nahezu widerstandsfreie Ableitung von Permeatfluid 220 durch mehrere miteinander verbundene Filtermodule 10. Die Permeatleitung 30 bildet eine nahezu widerstandsfreie Passage für Permeatfluid 220, welches durch die Membranen in den Innenraum der Filterelemente 60 tritt und dessen Strömung durch die im Innenraum angeordneten Drainageelemente 62 oder durch den geringen Innenquerschnitt von Kapillarrohrfiltern behindert ist. Die Durchführungen (7, 7') sind vorzugsweise durch eine Rohfluidleitung 40, die in ihrer Wand Auslassöffhungen 41 aufweist, verbunden. Durch die Rohfluidleitung 40 wird das dem Filtrationssystem 1 zugeführte Rohfluid 200 gleichmäßig in die Filtermodule 10 verteilt.

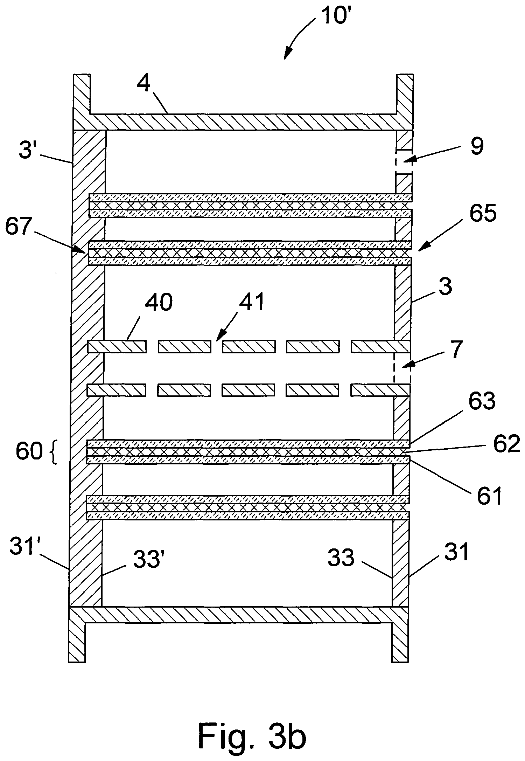

In Fig. 3b ist ein Filtermodul 10' mit einfach randseitigen Permeatauslassöffnungen 65 dargestellt. In dem Filtermodul 10' sind Randbereiche bzw. Permeatauslassöffnungen 67 der Filterelemente 60 von einer Stirnwand 3' fluiddicht umschlossen. Die Ableitung von Perematfluid 220 aus den Filterelementen 60 erfolgt lediglich über offene Randbereiche bzw. Permeatauslassöffhungen 65 in einer Stirnwand 3. Die weiteren Bezugszeichen haben die gleiche Bedeutung wie in Fig. 3a. Zusätzlich ist das in Fig. 3b dargestellte Filtermodul 10' mit einem Gehäuse 4 ausgestattet. Das Gehäuse 4 ist fluiddicht mit den Stirnwänden 3 und 3' verbunden. Das in Fig. 3a dargestellte Filtermodul 10 kann in gleicher Weise wie das Filtermodul 10' mit einem Gehäuse 4 ausgerüstet sein (um die Fig. 3a übersichtlich zu halten, wurde das Gehäuses 4 jedoch nicht gezeichnet).

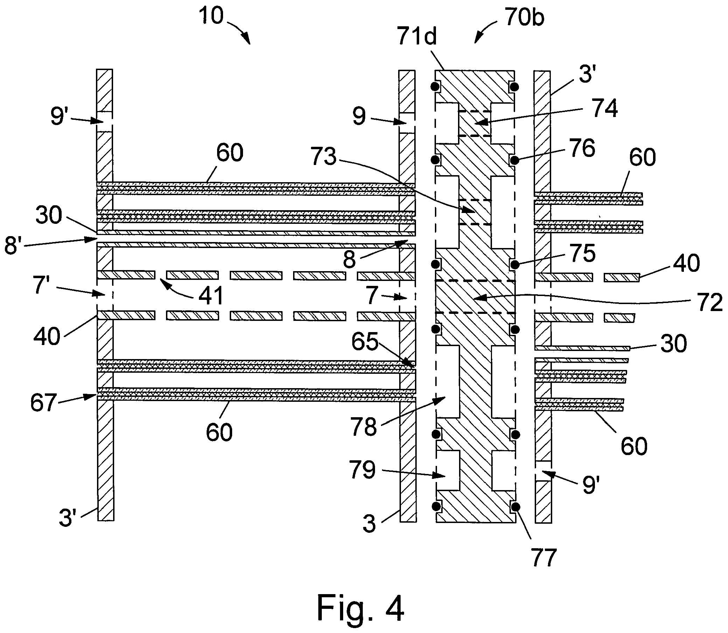

Fig. 4 zeigt in Explosionsdarstellung eine Schnittansicht der Verbindung zwischen zwei Filtermodulen 10 mittels einer Fluidkupplung 70b, wobei die Bezugszeichen die gleiche Bedeutung wie in Fig. 2b und 3a haben. Rohfluid strömt durch die Durchführungen (7, 7') in den Stirnwänden (3, 3') der Filtermodule 10 und durch die Durchführung 72 des Kupplungskörpers 71d. Aus dem Rohfluid gefiltertes Permatfluid fließt aus dem Innenraum der Filterlemente 60 durch Permatauslassöffnungen (65, 67) in den Stirnwänden (3, 3') in das Permatbecken 78 des Kupplungskörpers 71d und wird durch die Permeatleitung 30, die über Durchführungen (8, 8') mit den Permeatbecken 78 kommunizieren, weitergeleitet. Aufgrund der Verbindung über das Permeatbecken 78 ist es nicht erforderlich, die Permeatleitung 30 bzw. die Durchführungen (8, 8') mit der Durchführung 73 zur Deckung zu bringen. Dies ist aus Fig. 4 ersichtlich, in der die Permeatleitung 30 des auf der rechten Bildseite lediglich teilweise dargestellten Filtermoduls unten und die Permeatleitung 30 des auf der linken Seite vollständig abgebildeten Filtermoduls 10 oben angeordnet ist. Die Permeatleitungen 30 der beiden Filtermodule kommunizieren über die Permeatbecken 78 und die Durchführung 73. Ähnliches gilt für die Ableitung des Konzentratfluids, wobei der Durchlass 9 in der Stirnwand 3 des in Fig. 4 linker Hand abgebildeten Filtermoduls 10 mit dem Durchlass 9' in der Stirnwand 3' des rechter Hand abgebildeten Filtermoduls über die Konzentratbecken 79 und die Durchführung 74 kommuniziert.

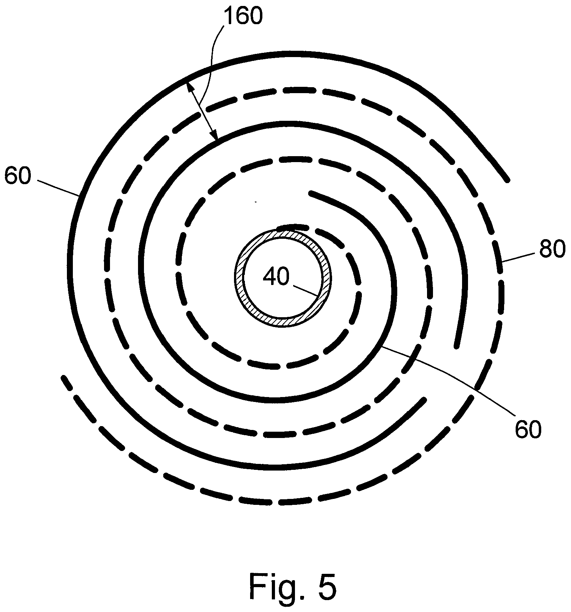

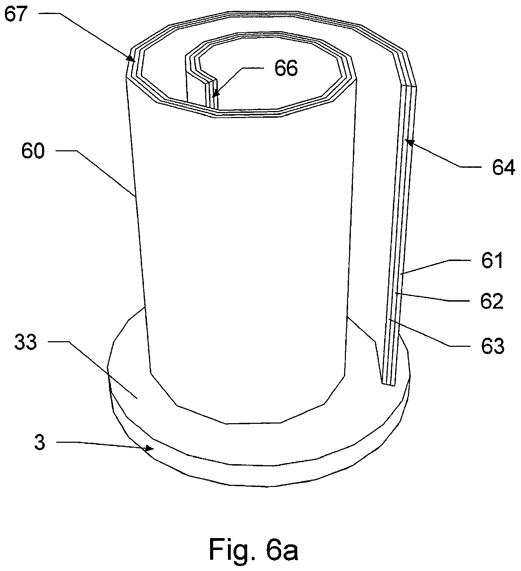

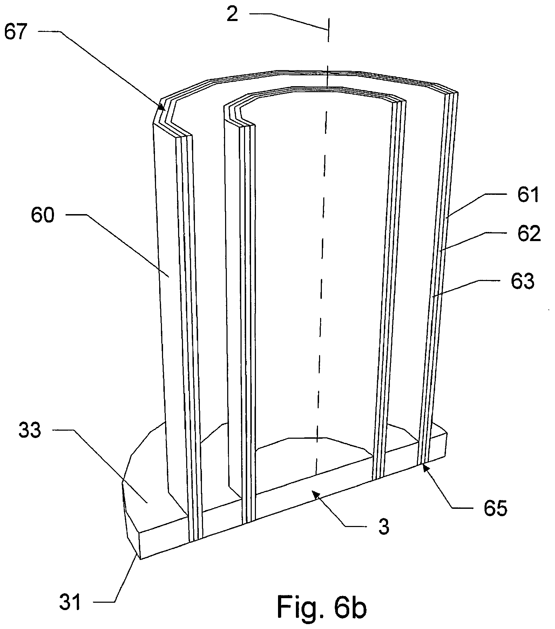

Im Folgenden wird eine besonders bevorzugte Ausführungsfonn des erfindungsgemäßen Filtrationsystems 1 beschrieben, welche ein neuartiges und im Stand der Technik bisher nicht bekanntes Wickelfiltermodul umfasst. Hierbei wird insbesondere auf Fig. 5 und Fig. 6a bis 6d Bezug genommen. Bei dem neuartigen Wickelfiltermodul sind die Filtermembranen (61, 63) vorzugsweise jeweils mit einer der beiden Seiten der Drainagelage 62 laminiert. Insbesondere werden die Filterlemente 60 aus einem bandförmigen, vorzugsweise flexiblen Filterverbundmaterial gefertigt, welches in einem quasi-kontinuierlich betriebenen Laminator aus zwei bandförmigen Filtermembranen und einer bandförmigen Drainagelage mittels Flüssigkleber oder festen bandförmigen Klebemitteln, wie Klebenetzen oder Klebefolien laminiert wird. Zur Herstellung des bandförmigen Filterverbundmaterials werden z.B. eine erste bandförmige Filtermembran, ein erstes bandförmiges Klebenetz aus thermoplastischem Polymer, eine bandförmige Drainagelage, ein zweites bandförmiges Klebenetz aus thermoplastischem Polymer und eine zweite bandförmige Filtermembran jeweils von einer separaten Vorratsrolle zugeführt und in einen Druckwalzenpaar zu einem bandförmigen Stapel zusammengeführt, der bandförmige Stapel in einem beheizten Walzenpaar an seiner Ober- und Unterseite erwärmt und anschließend abgekühlt, derart dass das erste und zweite Klebenetz aufschmelzen und anschließend abkühlen, wodurch die Drainagelage dauerhaft klebend mit den Filtermembranen verbunden wird.

Die Drainagelage besteht aus einem polymeren, anorganischen oder metallischen Bandmaterial, welches eine offene Struktur zur Durchleitung von Fluiden aufweist. Vorzugsweise handelt es sich bei dem Material der Drainagelage um ein Gitter oder ein Abstandsgewirke aus Kunststoff. Im Stand der Technik bekannte Abstandsgewirke bestehen aus einer ersten und zweiten flächigen Maschenkonstruktion und einem zwischen erster und zweiter Maschenkonstruktion angeordneten Polfadensystem aus Polfäden. Die Polfäden sind räumlich regelmäßig zueinander und in Ketten- oder Schussrichtung der Maschenkonstruktionen angeordnet, wobei jeder Polfaden abwechselnd durch Maschen der ersten und zweiten Maschenkonstruktion derart geführt ist, dass der Polfaden einen sägezahn- oder spiralförmigen Verlauf aufweist.

Die Filtermembran ist ein oder mehrschichtig, vorzugsweise zweischichtig aufgebaut. Gebräuchliche zweischichtige Filtermembranen bestehen aus einem Trägervlies und einer porösen Membranschicht. Bei der Herstellung von Filterverbundmaterial wird das Trägervlies mit der Drainagelage verbunden bzw. laminiert, so dass die poröse Membranschicht an der Außenseite des Filterverbundmaterials angeordnet ist. Die poröse Membranschicht ist durch Nassfällung oder Laminierung mit dem Trägervlies verbunden. Bei der Nassfällung wird die poröse Membranschicht auf dem Trägervlies abgeschieden, ansonsten auf das Trägervlies auflaminiert. Vorzugsweise besteht die poröse Membranschicht aus Polyethersulfon, Polysulfon, Polyacrylnitril, Polyvinylidenfluorid, Polyamid, Polyetherimid, Celluloseacetat, Regeneratcellulose, Polyolefin oder Fluorpolymer. Die poröse Membranschicht wird beispielsweise erzeugt, indem ein Vlies oder Gewebe mit Polymerlösung beschichtet und das Polymer in einem nachfolgenden Phaseninversionsschritt ausgefällt wird. Alternativ hierzu wird eine Polymerfolie in geeigneter Weise verstreckt, wobei in der Polymerfolie Poren entstehen. Die verstreckte Polymerfolie wird dann zur mechanischen Stabilisierung auf ein Trägervlies auflaminiert. Nach diesen Methoden hergestellte Filtermembranen sind kommerziell erhältlich, z.B. unter der Bezeichnung NADIR® Membranen (MICRODYN-NADIR GmbH, Wiesbaden) oder Celgard® Flat Sheet Membranes (Celgard Inc., Charlotte, NC, USA).

Zur Herstellung der Filterelemente 60 werden z.B. aus einem Filterverbundmaterial der voranstehend beschriebenen Art Filterzuschnitte mit geeigneter, vorzugsweise rechteckiger Form ausgeschnitten. Die erhaltenen Filterzuschnitte werden randseitig fluiddicht versiegelt mittels bekannter Methoden, wie z.B.
- Verbinden der Drainagelage mit den Filtermembranen durch thermisches oder Ultraschall-Schweißen;
- Kleben, wobei in einem Randbereich des Filterzuschnitts ein Flüssigkleber zwischen der Drainagelage und den Filtermembranen eingetragen und gehärtet bzw. vernetzt wird;
- Tauchkleben, wobei ein Randbereich des Filterzuschnitts an Ober- und Unterseite sowie an der Schnittfläche bzw. Stoßkante mit einem Kleber beaufschlagt wird;
- maschinelles Vernähen mit einem Faden; oder
- durch eine mechanische Klemmvorrichtung.

Hierbei werden mindestens zwei einander gegenüberliegende Randbereiche, bevorzugt drei oder vier Randbereiche der Filterzuschnitte über ihre Gesamtlänge fluiddicht versiegelt.

Die somit erhaltenen, vorzugsweise rechteckigen Filterelemente 60 weisen einen ersten und zweiten, fluiddicht versiegelten Randbereich (64, 66) und einen dritten und vierten offenen (d.h. unversiegelten) oder versiegelten Randbereich (65, 67) auf.

Ein oder mehrere aufeinander gestapelte Filterelemente 60 werden zu einem zylindrischen Spiralkörper gewickelt und durch geeignete mechanische Haltevorrichtungen, wie z.B. Bänder oder Ringe in dieser Form fixiert. Eine exemplarische Wickelanordnung ist in Fig. 5 dargestellt. Vorzugsweise werden die Flachfilterelemente 60 um ein Verteilerrohr 40 für Rohfluid gewickelt. In Weiterbildung der Erfindung werden dem ein- oder mehrlagigen Stapel aus Flachfilterlementen 60 vor dem Wickeln des Spiralkörpers ein oder mehrere flächenhaft ausgebildete, durchströmbare Abstandselemente 80 hinzugefügt (s. Fig. 5) Bei diesen Abstandselementen 80 handelt es sich z.B. um grobmaschige Gitter oder Netze aus Kunststoff. Vorzugsweise wird zwischen zwei Flachfilterelementen 60 jeweils ein Abstandselement 80 eingefügt.

In einer besonders bevorzugten Ausführungsform der Erfindung werden der Wickelanordnung bzw. dem Spiralkörper ein oder mehrere, vorzugsweise rohrförmige Permeatleitungen 30 hinzugefügt. Die Permeatleitungen 30 werden zwischen zwei benachbarten Flachfilterelementen 60 oder zwischen einem Flachfilterelement 60 und einem Abstandselement 80 derart angeordnet, dass ihre Längsachse im wesentlichen parallel zur Längsachse der Wickelanordnung ausgerichtet ist. Die Länge der Permeatleitungen 30 entspricht dabei der Länge der Wickelanordnung, d.h. der Breite der Flachfilterelemente 60.

Der mittels Haltevorrichtungen fixierte Spiralkörper mit dem optionalen Verteilerrohr 40 und den optionalen Permeatleitungen 30 wird mit einer ersten Stirnwand 3 versehen, indem er stirnseitig mit einem verflüssigten härtbaren Material vergossen und anschließend das Material ausgehärtet wird, wobei die erste Stirnwand 3 die dritten Ränder 65 fluiddicht umschließt. Zur Herstellung der ersten Stirnwand 3 wird z.B. eine Gießform mit rechteckigem oder kreisförmigem Innenquerschnitt und planem Boden bis zu einer vorbestimmten Höhe mit Epoxydharz gefüllt. Zur Verstärkung der Stirnwand 3 ist es zweckmäßig, dem Epoxydharz Glas- oder Carbonfasern beizumengen. Hieran anschließend wird der Spiralkörper relativ zur Gießform so ausgerichtet, dass der erste Randbereich 65 vollständig in das Epoxydharz eintaucht. Das Epoxydharz wird dann thermisch oder mittels UV-Licht zu einer Vorform ausgehärtet, welche den ersten Randbereich 65 fluiddicht einschließt. Die Vorform wird aus der Gießform entnommen und mittels Säge-, Fräs-, Dreh- oder Schleifmaschinen mechanisch bearbeitet, um der ersten Stirnwand 3 eine genau definierte Endform zu verleihen und um den Randbereich 65 an der Außenseite 31 der Stirnwand 3 freizulegen und zu öffnen, so dass ein durchströmbarer Zugang zum Inneren des Flachfilterlements 60 d.h. zur Drainagelage 62 entsteht. In gleicher Weise werden durch mechanische Bearbeitung das optionale Verteilerrohr 40 und die optionalen Permeatleitungen 30 geöffnet. Falls erforderlich wird hierzu ergänzend eine Bohrung oder Fräsung ausgeführt, um Harz aus dem Inneren des Verteilerrohrs 40 und den Permeatleitungen 30 zu entfernen. In Weiterbildung der Erfindung wird in die Stirnwand 3 eine Durchführung 9 für Konzentratfluid gebohrt. Vorzugsweise wird das Wickelfiltermodul mit einer zweiten Stirnwand 3' ausgestattet, wobei die zweite Stirnwand 3' in der gleichen Weise wie die erste Stirnwand 3 z.B. durch Vergießen mit einem verflüssigten härtbaren Material und anschließende mechanische Bearbeitung angefertigt wird.

Die Flachfilterelemente 60 sind aufgrund ihres dreilagigen Aufbaus aus zwei Filtermembranen (61, 63) und der zwischenliegenden Drainagelage 62 robust und widerstehen einem transmembranen Differentialdruck zwischen der Außenseite der Filtermembranen (61, 63) und der Drainagelage 62 von größer 2 bar, bevorzugt größer 10 bar, und besonders bevorzugt größer 20 bar ohne mechanische Beschädigung oder Leckbildung. Erfindungsgemäß haben die Flachfilterelemente 60 in Richtung der Achse 2 eine Länge von 0,1 bis 6,0 m, bevorzugt von 0,4 bis 4,0 m, und besonders bevorzugt von 0,6 bis 2,5 m. Der mit den spiralförmig gewickelten Flachfilterelementen 60 ausgefüllte Raumbereich hat, bezogen auf die Achse 2 als Mittelachse des spiralförmigen Wickels, eine radiale Abmessung von 0,05 bis 1,5 m, bevorzugt von 0,1 bis 1,25 m, und besonders bevorzugt von 0,2 bis 0,8 m. Hierbei beträgt der (in Fig. 5 mit dem Bezugszeichen 160 bezeichnete) radiale Abstand zwischen der Außenseite der spiralförmig gewickelten Flachfilterelemente 60 und der hierzu benachbarten Innenseite derselben oder weiterer Flachfilterelemente 60 0,1 bis 20 mm, bevorzugt 0,3 bis 8 mm, und besonders bevorzugt 0,5 bis 3 mm. Das mit den voranstehend genannten Abmessungen spiralförmig gewickelte Filtermodul 1 weist eine aktive Filtrationsfläche pro Filtermodul von größer 50 m², bevorzugt größer 250 m², und besonders bevorzugt von größer 1000 m² auf.

Fig. 5 zeigt schematisch den Querschnitt einer bevorzugten Filterwicklung mit Verteilerrohr 40 und zwei spiralförmig gewickelten Flachfilterelementen 60 und einem zwischen den Flachfilterelementen 60 angeordneten Abstandselement 80. Das Abstandselement 80 ist vorzugsweise als grobmaschiges Gitter oder Netz aus Kunststoff ausgestaltet. Der radiale Abstand zwischen der Außenseite der spiralförmig gewickelten Flachfilterelemente 60 und der hierzu benachbarten Innenseite derselben oder weiterer Flachfilterelemente 60 ist mit einem Doppelpfeil 160 bezeichnet. Der radiale Abstand 160 beträgt 0,1 bis 20 mm, bevorzugt 0,3 bis 8 mm, und besonders bevorzugt 0,5 bis 3 mm.

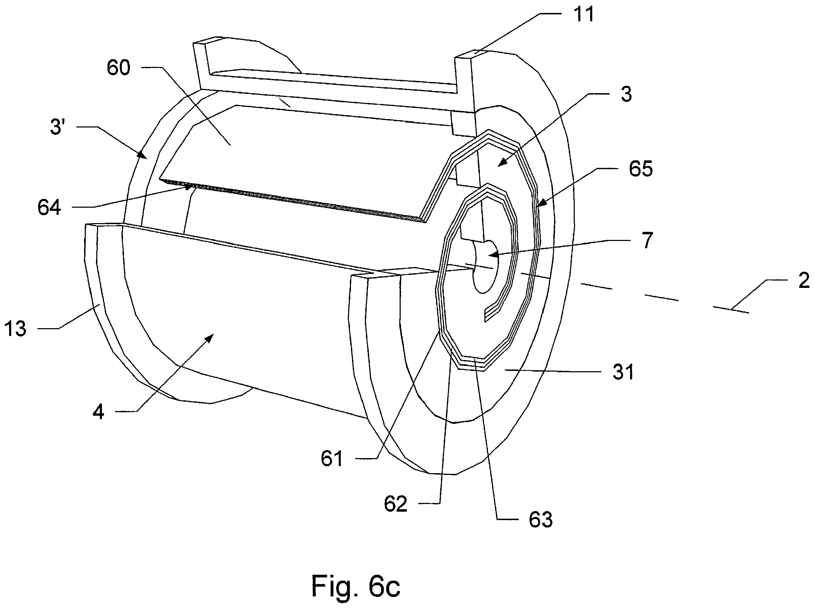

Fig. 6c zeigt eine perspektivische, teilweise geschnittene Ansicht des bevorzugten Wickelfiltermoduls mit zwei Stirnwänden (3, 3') und einem Gehäuse 4, wobei die Ränder der Stirnwände (3, 3') fluiddicht mit dem Gehäuse 4 verbunden sind. Zweckmäßig sind die Stirnwände (3, 3') mit zentrisch angeordneten Durchführungen (7, 7') zur Durchleitung eines zu filternden Rohfluids ausgestattet. Bevorzugt ist das Gehäuse 4 rohrförmig ausgestaltet. In einer zweckmäßigen Weiterbildung ist das Gehäuse 4 stirnseitig mit Flanschen (11, 13) ausgestattet, die es ermöglichen, das Wickelfiltermodul in einfacher Weise mit weiteren Filtermodulen oder anderen Komponenten eines Filtrationssystems zu verbinden. Das Wickelfiltermodul widersteht einem Innendruck von größer 2 bar, bevorzugt größer 10 bar, und besonders bevorzugt größer 20 bar ohne mechanische Beschädigung oder Leckbildung.

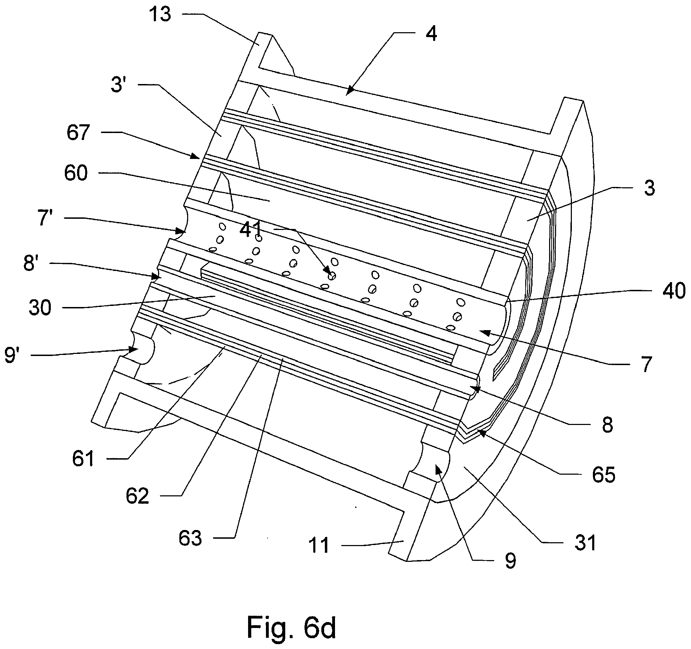

Fig. 6d zeigt das bevorzugte Wickelfiltermodul mit zwei Stirnwänden (3, 3') und einem zentrisch angeordneten Verteilerrohr 40 welches die Durchführungen (7, 7') in den Stirnwänden (3, 3') verbindet. Das Verteilerrohr 40 weist in seiner Wand eine oder mehrere Öffnungen 41 auf, durch welche das Rohfluid in radialer Richtung nach außen in den Raum zwischen den spiralförmig gewickelten Flachfilterelementen 60 strömt. Im Weiteren sind in Fig. 6d eine Permeatleitung 30 mit Durchführungen (8, 8') sowie Durchführungen (9, 9') für Konzentratfluid gezeigt.

### Bezugszeichenliste

- 1: Filtrationssystem
- 10, 10': Filtermodul
- 3, 3': Stirnwand der Filtermodule
- 4: Gehäuse des Filtermoduls
- 11, 13: Gehäuseflansche
- 7, 7': Durchführung in Stirnwand für Rohfluid
- 8, 8': Durchführung in Stirnwand für Permeatfluid
- 9, 9': Durchführung in Stirnwand für Konzentratfluid
- 30: Permeatleitung
- 40: Rohfluidleitung, Verteilerrohr
- 41: Auslassöffnungen in Rohfluidleitung
- 60: Filterelement
- 65, 66, 67, 68: Randbereiche der Filterelemente
- 70, 70a, 70b, 70c: Fluidkupplung
- 71a, 71b, 71c, 71d, 71e: Kupplungskörper
- 72: Durchführung in Fluidkupplung für Rohfluid
- 73: Durchführung in Fluidkupplung für Permeatfluid
- 74: Durchführung in Fluidkupplung für Konzentratfluid
- 75: Dichtung für Rohfluid
- 76: Dichtung für Permeatfluid
- 77: Dichtung für Konzentratfluid
- 78: Permeatbecken
- 79: Konzentratbecken
- 200: Rohfluid
- 210: Konzentratfluid
- 220: Permeatfluid

## Patentansprüche

1. Filtrationssystem (1), umfassend
- mehrere Filtermodule (10, 10') und
- mehrere Fluidkupplungen (70, 70a, 70b, 70c) zur Ankopplung der Filtermodule (10, 10') an einen Fluidverteiler und zur Ankopplung an weitere Filtermodule (10, 10'), wobei
- die Filtermodule (10, 10') als Flachfilter-, Kapillarrohrfilter- oder Wickelfiltermodule mit einfach oder zweifach randseitigen Permeatauslassöffnungen (65, 67) ausgestaltet sind;
- die Fluidkupplungen (70, 70a, 70b, 70c) mindestens eine Durchführung (73) für Permeatfluid und mindestens eine Durchführung (72) für Rohfluid, die von der Durchführung (73) für Permeatfluid fluiddicht isoliert ist, aufweisen;
- die Durchführung (73) für Permeatfluid mit den Permeatauslassöffnungen (65, 67) verbunden ist;
- jeweils zwei Filtermodule (10, 10') mittels einer Fluidkupplung (70, 70a, 70b, 70c) miteinander verbunden sind;
- die Filtermodule (10, 10') zwei Stirnwände (3, 3') umfassen, **dadurch gekennzeichnet, dass** mindestens eine Stirnwand (3, 3') Permeatauslassöffnungen (65, 67), eine oder mehrere Durchführungen (7, 7') für Rohfluid und eine oder mehrere Durchführungen (9, 9') für Konzentratfluid aufweist;
- die Fluidkupplungen (70, 70a, 70b, 70c) mindestens eine Durchführung (74) für Konzentratfluid, die von der Durchführung (73) für Permeatfluid fluiddicht isoliert ist, aufweisen.

2. Filtrationssystem (1) nach Anspruch 1, **dadurch gekennzeichnet, dass** die Fluidkupplung (70, 70a, 70b, 70c) einen ein-, zwei- oder dreistückig ausgebildeten Kupplungskörper (71a, 71b, 71c, 71d, 71e) umfasst.

3. Filtrationssystem (1) nach Anspruch 1, **dadurch gekennzeichnet, dass** die Fluidkupplung (70, 70a, 70b, 70c) einen einstückig ausgebildeten Kupplungskörper (71d, 71e) mit mindestens einem Permeatbecken (78) umfasst, wobei das Permeatbecken (78) mit der Durchführung (73) für Permeatfluid und mit den Permeatauslassöffnungen (65, 67) der Filtermodule (10, 10') verbunden ist.

4. Filtrationssystem (1) nach Anspruch 3, **dadurch gekennzeichnet, dass** der einstückig ausgebildete Kupplungskörper (71d, 71e) mindestens ein Konzentratbecken (79) umfasst, wobei das Konzentratbecken (79) mit der Durchführung für Konzentratfluid (74) verbunden ist.

5. Filtrationssystem (1) nach Anspruch 1, **dadurch gekennzeichnet, dass** die Fluidkupplungen (70, 70a, 70b, 70c) Dichtungen (75, 76, 77) umfassen, wobei die Dichtungen (75, 76, 77) vorzugsweise ringartig geschlossen sind.

6. Filtrationssystem (1) nach Anspruch 1, **dadurch gekennzeichnet, dass** mindestens eine Stirnwand (3, 3') des Filtermoduls (10, 10') eine oder mehrere Durchführungen (8, 8') für Permeatfluid aufweist.

7. Filtrationssystem (1) nach Anspruch 1, **dadurch gekennzeichnet, dass** die Filtermodule (10, 10') ein Gehäuse (4) umfassen.

8. Filtrationssystem (1) nach Anspruch 7, **dadurch gekennzeichnet, dass** das Gehäuse (4) der Filtermodule rohrförmig ausgestaltet ist.

9. Filtrationssystem (1) nach Anspruch 1, **dadurch gekennzeichnet, dass** die Filtermodule (10, 10') eine oder mehrere Permeatleitungen (30) umfassen.

10. Filtrationssystem (1) nach Anspruch 1, **dadurch gekennzeichnet, dass** die Filtermodule (10, 10') eine oder mehrere Rohfluidleitungen (40) umfassen, wobei die Wand der Rohfluidleitungen (40) Auslassöffnungen (41) aufweist.

11. Filtrationssystem (1) nach Anspruch 1, **dadurch gekennzeichnet, dass** die Filtermodule (10, 10') als spiralförmige Wickelfiltermodule ausgestaltet sind und ein oder mehrere Flachfilterelemente (60) mit jeweils zwei oder drei fluiddicht versiegelten Randbereichen (66, 67, 68) umfassen, wobei zwei der fluiddicht versiegelten Randbereiche (66, 68) im wesentlichen in axialer Richtung zwischen den beiden Stirnseiten des Filtermoduls (10, 10') verlaufen.

12. Filtrationssystem (1) nach Anspruch 11, **dadurch gekennzeichnet, dass** die Filtermodule (10, 10') eine aktive Filtrationsfläche von größer 50 m², bevorzugt größer 250 m², und besonders bevorzugt von größer 1000 m² aufweisen.

## Claims

1. Filtration system (1), comprising
- a plurality of filter modules (10, 10') and
- a plurality of fluid couplings (70, 70a, 70b, 70c) for coupling the filter modules (10, 10') to a fluid distributor and optionally for coupling said filter modules to further filter modules (10, 10'), wherein
- the filter modules (10, 10') are configured as flat filter, capillary tube filter or wound filter modules with single or double permeate outlet openings (65, 67) at the edges;
- the fluid couplings (70, 70a, 70b, 70c) have at least one duct (73) for permeate fluid and at least one duct (72) for untreated fluid, which is isolated in a fluidtight manner from the duct (73) for permeate fluid;
- the duct (73) for permeate fluid is connected to the permeate outlet openings (65, 67);
- in each case two filter modules (10, 10') are connected to one another by means of a fluid coupling (70, 70a, 70b, 70c);
- the filter modules (10, 10') comprise two end walls (3, 3'), **characterized in that** at least one end wall (3,3') has permeate outlet openings (65, 67), one or more ducts (7,7')- for untreated fluid and one or more ducts (9, 9') for concentrate fluid;
- the fluid couplings (70, 70a, 70b, 70c) have at least one duct (74) for concentrate fluid, which is isolated in a fluidtight manner from the duct (73) for permeate fluid.

2. Filtration system (1) according to Claim 1, **characterized in that** the fluid coupling (70, 70a, 70b, 70c) comprises a coupling body (71a, 71b, 71c, 71d, 71e) which is of single-piece, two-piece or three-piece design.

3. Filtration system (1) according to Claim 1, **characterized in that** the fluid coupling (70, 70a, 70b, 70c) comprises a coupling body (71d, 71e) which is of single-piece design and has at least one permeate reservoir (78), the permeate reservoir (78) being connected to the duct (73) for permeate fluid and to the permeate outlet openings (65, 67) of the filter modules (10, 10').

4. Filtration system (1) according to Claim 3, **characterized in that** the coupling body (71d, 71e) which is of single-piece design comprises at least one concentrate reservoir (79), the concentrate reservoir (79) being connected to the duct for concentrate fluid (74).

5. Filtration system (1) according to Claim 1, **characterized in that** the fluid couplings (70, 70a, 70b, 70c) comprise seals (75, 76, 77), the seals (75, 76, 77) preferably being annularly closed.

6. Filtration system (1) according to Claim 1, **characterized in that** at least one end wall (3, 3') of the filter module (10, 10') has one or more ducts (8, 8') for permeate fluid.

7. Filtration system (1) according to Claim 1, **characterized in that** the filter modules (10, 10') comprise a housing (4).

8. Filtration system (1) according to Claim 7, **characterized in that** the housing (4) of the filter modules is of tubular configuration.

9. Filtration system (1) according to Claim 1, **characterized in that** the filter modules (10, 10') comprise one or more permeate lines (30).

10. Filtration system (1) according to Claim 1, **characterized in that** the filter modules (10, 10') comprise one or more untreated fluid lines (40), the wall of the untreated fluid lines (40) having outlet openings (41).

11. Filtration system (1) according to Claim 1, **characterized in that** the filter modules (10, 10') are configured as spiral wound filter modules and comprise one or more flat filter elements (60) having in each case two or three edge regions (66, 67, 68) sealed in a fluidtight manner, with two of the edge regions (66, 68) sealed in a fluidtight manner running substantially in the axial direction between the two end sides of the filter module (10, 10').

12. Filtration system (1) according to Claim 11, **characterized in that** the filter modules (10, 10') have an active filtration surface of greater than 50 m², preferably greater than 250 m², and particularly preferably of greater than 1000 m².

## Revendications

1. SYSTÈME DE FILTRATION **(1),** COMPRENANT
- PLUSIEURS MODULES FILTRANTS **(10, 10')** ET
- PLUSIEURS RACCORDS FLUIDIQUES **(70, 70_{A}, 70_{B}, 70_{C})** POUR LE COUPLAGE DES MODULES FILTRANTS **(10, 10')** À UN RÉPARTITEUR DE FLUIDE ET POUR LE COUPLAGE À D'AUTRES MODULES FILTRANTS **(10, 10'),** DANS LEQUEL
- LES MODULES FILTRANTS **(10, 10')** SONT CONFIGURÉS EN TANT QUE MODULES À FILTRES PLATS, À FILTRES À TUBES CAPILLAIRES OU A FILTRES ENROULÉS, AVEC DES ORIFICES DE SORTIE DE PERMÉAT CÔTÉ BORD SIMPLES OU DOUBLES **(65, 67) ;**
- LES RACCORDS FLUIDIQUES **(70, 70_{A}, 70_{B}, 70_{C})** PRÉSENTENT AU MOINS UN PASSAGE **(73)** POUR FLUIDE DE PERMÉAT ET AU MOINS UN PASSAGE **(72)** POUR FLUIDE BRUT, QUI EST ISOLÉ DE MANIÈRE ÉTANCHE AUX FLUIDES PAR LE PASSAGE **(73)** POUR FLUIDE DE PERMÉAT,
- LE PASSAGE **(73)** POUR FLUIDE DE PERMÉAT EST RELIÉ AUX ORIFICES DE SORTIE DE PERMÉAT **(65, 67)**;
- RESPECTIVEMENT DEUX MODULES FILTRANTS **(10, 10')**SONT RELIÉS L'UN À L'AUTRE AU MOYEN D'UN RACCORD FLUIDIQUE **(70, 70_{A}, 70_{B}, 70_{C}) ;**
- LES MODULES FILTRANTS **(10, 10')**COMPRENNENT DEUX PAROIS FRONTALES **(3, 3'), CARACTÉRISÉ EN CE QU'**AU MOINS UNE PAROI FRONTALE **(3, 3')** PRÉSENTE DES ORIFICES DE SORTIE DE PERMÉAT **(65, 67),** UN OU PLUSIEURS PASSAGES (7, **7')** POUR FLUIDE BRUT ET UN OU PLUSIEURS PASSAGES **(9, 9')** POUR FLUIDE DE CONCENTRAT ;
- LES RACCORDS FLUIDIQUES **(70, 70_{A}, 70_{B}, 70_{C})** PRÉSENTENT AU MOINS UN PASSAGE **(74)** POUR FLUIDE DE CONCENTRAT, QUI EST ISOLÉ DE MANIÈRE ÉTANCHE AUX FLUIDES PAR LE PASSAGE **(73)** POUR FLUIDE DE PERMÉAT,

2. SYSTÈME DE FILTRATION **(1)** SELON LA REVENDICATION 1, **CARACTÉRISÉ EN CE QUE** LE RACCORD FLUIDIQUE **(70, 70_{A}, 70_{B}, 70_{C})** COMPREND UN CORPS DE COUPLAGE **(71_{A,} 71_{B}, 71_{C}, 71_{D}, 71_{E})** RÉALISÉ EN UNE, DEUX OU TROIS PIÈCES.

3. SYSTÈME DE FILTRATION **(1)** SELON LA REVENDICATION **1, CARACTÉRISÉ EN CE QUE** LE RACCORD FLUIDIQUE **(70, 70_{A}, 70_{B}, 70_{C})** COMPREND UN CORPS DE COUPLAGE **(71_{D}, 71_{E})** RÉALISÉ EN UNE PIÈCE AVEC AU MOINS UNE CUVE DE PERMÉAT **(78),** DANS LEQUEL LA CUVE DE PERMÉAT **(78)** EST RELIÉE AU PASSAGE **(73)** POUR FLUIDE DE PERMÉAT ET AUX ORIFICES DE SORTIE DE PERMÉAT **(65, 67)** DES MODULES FILTRANTS **(10, 10').**

4. SYSTÈME DE FILTRATION **(1)** SELON LA REVENDICATION **3, CARACTÉRISÉ EN CE QUE** LE CORPS DE COUPLAGE **(71_{D}, 71_{E})** RÉALISÉ EN UNE PIÈCE COMPREND AU MOINS UNE CUVE DE CONCENTRAT **(79),** DANS LEQUEL LA CUVE DE CONCENTRAT **(79)** EST RELIÉE AU PASSAGE POUR FLUIDE DE CONCENTRAT **(74).**

5. SYSTÈME DE FILTRATION **(1)** SELON LA REVENDICATION **1, CARACTÉRISÉ EN CE QUE** LES RACCORDS FLUIDIQUES **(70, 70_{A}, 70_{B}, 70_{C})** COMPRENNENT DES JOINTS D'ÉTANCHÉITÉ **(75, 76, 77),** DANS LEQUEL LES JOINTS D'ÉTANCHÉITÉ **(75, 76, 77)** SONT DE PRÉFÉRENCE FERMÉES EN ANNEAU.

6. SYSTÈME DE FILTRATION **(1)** SELON LA REVENDICATION **1, CARACTÉRISÉ EN CE QU'**AU MOINS UNE PAROI FRONTALE **(3, 3')** DU MODULE FILTRANT **(10, 10')** PRÉSENTE UN OU PLUSIEURS PASSAGES **(8, 8')** POUR FLUIDE DE PERMÉAT.

7. SYSTÈME DE FILTRATION **(1)** SELON LA REVENDICATION **1, CARACTÉRISÉ EN CE QUE** LES MODULES FILTRANTS **(10, 10')**COMPRENNENT UN BOÎTIER **(4).**

8. SYSTÈME DE FILTRATION **(1)** SELON LA REVENDICATION **7, CARACTÉRISÉ EN CE QUE** LE BOÎTIER **(4)** DES MODULES FILTRANTS EST CONFIGURÉ EN FORME DE TUBE.

9. SYSTÈME DE FILTRATION **(1)** SELON LA REVENDICATION **1, CARACTÉRISÉ EN CE QUE** LES MODULES FILTRANTS **(10, 10')** COMPRENNENT UNE OU PLUSIEURS CONDUITES DE PERMÉAT **(30).**

10. SYSTÈME DE FILTRATION **(1)** SELON LA REVENDICATION **1, CARACTÉRISÉ EN CE QUE** LES MODULES FILTRANTS **(10, 10')** COMPRENNENT UNE OU PLUSIEURS CONDUITES DE FLUIDE BRUT **(40),** DANS LEQUEL LA PAROI DES CONDUITES DE FLUIDE BRUT **(40)** PRÉSENTE DES ORIFICES DE SORTIE **(41).**

11. SYSTÈME DE FILTRATION **(1)** SELON LA REVENDICATION **1, CARACTÉRISÉ EN CE QUE** LES MODULES FILTRANTS **(10, 10')** SONT CONFIGURÉS EN TANT QUE MODULES À FILTRES ENROULÉS EN FORME DE SPIRALE ET COMPRENNENT UN OU PLUSIEURS ÉLÉMENTS À FILTRES PLATS **(60)** AVEC RESPECTIVEMENT DEUX OU TROIS ZONES DE BORD SCELLÉES DE MANIÈRE ÉTANCHE AUX FLUIDES **(66, 67, 68),** DANS LEQUEL DEUX DES ZONES DE BORD SCELLÉES DE MANIÈRE ÉTANCHE AUX FLUIDES **(66, 68)** S'ÉTENDENT SENSIBLEMENT DANS LA DIRECTION AXIALE ENTRE LES DEUX CÔTÉS FRONTAUX DU MODULE FILTRANT **(10, 10').**

12. SYSTÈME DE FILTRATION **(1)** SELON LA REVENDICATION **11, CARACTÉRISÉ EN CE QUE** LES MODULES FILTRANTS **(10, 10')** PRÉSENTENT UNE SURFACE DE FILTRATION ACTIVE SUPÉRIEURE À **50 M²,** DE PRÉFÉRENCE SUPÉRIEURE À **250 M²,** ET DE MANIÈRE PARTICULIÈREMENT PRÉFÉRÉE SUPÉRIEURE A **1000 M².**
